# EUROPEAN PATENT APPLICATION

(11) **EP 1 638 096 A1**
(43) Date of publication of application: **22.03.2006**
(21) Application number: 04733185.5
(22) Date of filing: 14.05.2004
(51) Int. Cl.: G11B 20/10, G11B 20/12, G09C 1/00

(54) **INFORMATION RECORDING MEDIUM, INFORMATION PROCESSING DEVICE AND METHOD**

(30) Priority: 28.05.2003 JP 2003150906
(71) Applicant: SONY CORPORATION, Tokyo 141-0001 (JP)
(72) Inventor: EBIHARA, Munetake c/o SONY CORPORATION, Shinagawa-Ku, Tokyo (JP); KATSUMATA, Mitsuru c/o SONY CORPORATION, Shinagawa-Ku, Tokyo (JP); KUNO, Hiroshi c/o SONY CORPORATION, Shinagawa-Ku, Tokyo (JP); HAYASHI, Takamichi c/o SONY CORPORATION, Shinagawa-Ku, Tokyo (JP)
(74) Representative: Körber, Martin Hans
(86) International application number: PCT/JP2004/006900
(87) International publication number: WO 2004/107339

(57) **Abstract**

There is provided the present invention to prevent illegal copying of recorded information and enable flexible management of contents, and further facilitate improvement of copy protection technology and the like. A key obtaining module (2) is recorded on a read-only information recording medium (1) to which a copy protection technology is applied. A reproducing module (3) safely obtains a media key unique to the key obtaining module (2) from the key obtaining module (2), generates a content key from the media key, and decrypts an encrypted content (4) using the content key and reproduces the content. In this case, while the key obtaining module (2) needs to be present on the information recording medium (1), the reproducing module (3) and the encrypted content (4) do not need to be present on the information recording medium (1) and may be present outside the information recording medium (1).

## Description

### Technical Field

The present invention relates to an information recording medium that prevents unauthorized use of contents and enables flexible management of the contents, and further facilitates improvement of copy protection technology and the like, and an apparatus and a method for information processing that reproduce contents using such an information recording medium.

### Background Art

With recent increase in capacity and spread of information recording media such as optical disks and the like, prevention of illegal copies has become important to protect the copyright of information recorded thereon. That is, because copies of audio data and video data can be easily made without degradation by copying or dubbing, and computer data identical to original computer data can be easily copied, problems such as infringement of copyright by illegal copies and the like have already occurred.

Thus, a music CD outside the Red Book standard, the CD being referred to as a copy control CD (Copy Control Compact Disk; CCCD), has been developed and sold with an objective of preventing the above-mentioned illegal copies. Although audio data recorded in a second session area of this CCCD can be reproduced on a personal computer using a special reproducing module recorded on the CCCD, the audio data cannot be captured into the personal computer (ripping) and is thus prevented from being copied.

In addition, a CD-ROM (Compact Disk - Read Only Memory) referred to as SecuROM (registered trademark) has been developed and sold with a same objective of preventing illegal copies. With this SecuROM, a copy protection key hidden in sub-code (Q sub-channel) is extracted, and an application having at least a part thereof encrypted is decrypted using the copy protection key, so that the application can be executed. However, in the case of an illegal copy, a copy protection key different from the copy protection key used to encrypt the application is extracted, and therefore the application cannot be executed (Japanese Patent Laid-open No. Hei 11-250512).

However, with the conventional CCCD or SecuROM (registered trademark), the medium and music information (content) recorded on the medium are inseparable. Therefore the contents cannot be managed separately from the medium, and thus are not flexibly managed. In addition, when the copy protection technology of the medium is to be upgraded, software that needs to be installed on a personal computer for reproducing the contents recorded on the medium may be complicated.

The present invention is proposed in view of such a conventional actual situation, and it is an object of the present invention to provide an information recording medium that prevents unauthorized use of contents and enables flexible management of the contents, and further facilitates improvement of copy protection technology and the like, and an apparatus and a method for information processing that reproduce contents using such an information recording medium.

### Disclosure of Invention

In order to achieve the above object, according to the present invention, there is provided an information recording medium on which a first execution file is recorded in an uncopiable manner, wherein the first execution file includes authenticating means for performing an authentication process with a second execution file, key obtaining means for obtaining unique key information unique to the first execution file, and transmitting means for transmitting the unique key information to the second execution file, and the first execution file is executed when the information recording medium is inserted into an information processing apparatus.

The first execution file recorded on such an information recording medium is executed when the information recording medium is inserted into the information processing apparatus, performs the mutual authentication process with the second execution file, and transmits the unique key information unique to the first file to the second file.

In addition, in order to achieve the above object, according to the present invention, there is provided an information processing apparatus into which an information recording medium on which a first execution file is recorded in an uncopiable manner is inserted, the information processing apparatus including a second execution file for reproducing an encrypted content, wherein the second execution file includes authenticating means for performing an authentication process with the first execution file, key generating means for generating encryption key information on a basis of unique key information obtained from the first execution file, decrypting means for decrypting the encrypted content using the encryption key information, and reproducing means for reproducing the decrypted content, and the second execution file is executed when the information recording medium is inserted.

The second execution file possessed by such an information processing apparatus is executed when the information recording medium on which the first execution file is recorded in an uncopiable manner is inserted, performs the mutual authentication process with the first execution file, generates encryption key information on a basis of unique key information obtained from the first execution file, decrypts the encrypted content using the encryption key information, and reproduces the decrypted content.

In addition, in order to achieve the above object, according to the present invention, there is provided an information processing method of an information processing apparatus into which apparatus an information recording medium on which a first execution file is recorded in an uncopiable manner is inserted, the information processing method including: an authenticating step for performing an authentication process with the first execution file; a key generating step for generating encryption key information on a basis of unique key information obtained from the first execution file; a decrypting step for decrypting an encrypted content using the encryption key information; and a reproducing step for reproducing the decrypted content.

Such an information processing method performs the mutual authentication process with the first execution file recorded on the information recording medium, generates encryption key information on a basis of unique key information obtained from the first file, decrypts the encrypted content using the encryption key information, and reproduces the decrypted content.

### Brief Description of Drawings

FIG. 1 is a diagram of assistance in explaining a conceptual configuration of a present embodiment;
FIG. 2 is a flowchart of assistance in explaining an example of a process to the obtainment of a media key by a key obtaining module to the transfer of the media key to a reproducing module;
FIG. 3 is a flowchart of assistance in explaining another example of the process to the obtainment of a media key by the key obtaining module to the transfer of the media key to the reproducing module;
FIG. 4 is a flowchart of assistance in explaining a process to the obtainment by the reproducing module of a key from the key obtaining module to decrypting and reproduction by the reproducing module of an encrypted content;
FIG. 5 is a flowchart of assistance in explaining a process to the obtainment by the reproducing module of a key from the key obtaining module to the importing of an encrypted content to an information processing apparatus; and
FIG. 6 is a diagram showing an example of configuration of the information processing apparatus according to the present embodiment.

### Best Mode for Carrying out the Invention

A concrete embodiment to which the present invention is applied will hereinafter be described in detail with reference to the drawings.

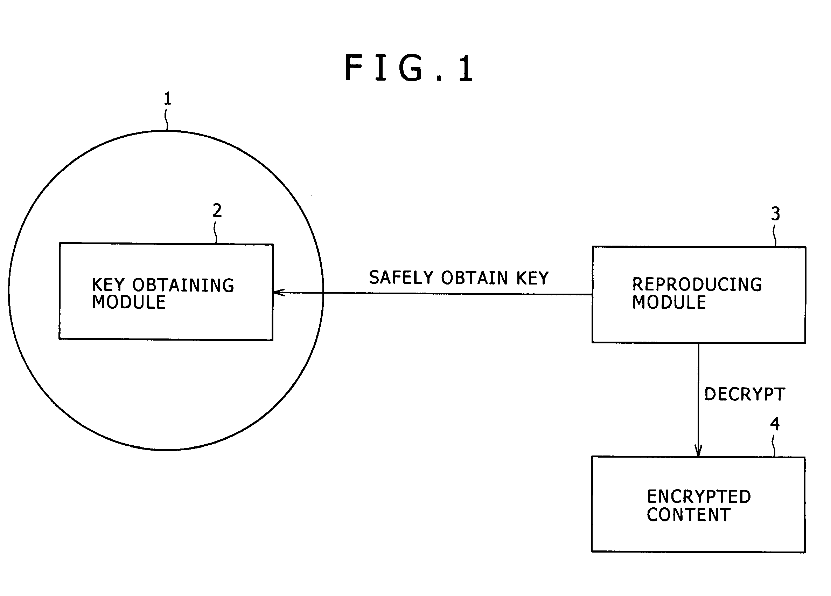

A conceptual configuration of the present embodiment will first be described with reference to FIG. 1. A key obtaining module 2 (first execution file) in FIG. 1 is recorded on a read-only information recording medium 1 to which a copy protection technology is applied. While this copy protection technology includes for example a technology used in SecuROM (registered trademark) and a technology of a so-called dummy file method, the copy protection technology is not limited to these, and various technologies can be used. A reproducing module 3 (second execution file) safely obtains a media key (unique key information) unique to the key obtaining module 2 from the key obtaining module 2, generates a content key (encryption key information) from the media key, and decrypts an encrypted content 4 using the content key and reproduces the content.

Thus, in the present embodiment, the content is provided in an encrypted state, and the media key used to decrypt the encrypted content 4 is recorded on the information recording medium 1 to which the copy protection technology is applied. Hence, even when the encrypted content 4 is copied, the media key cannot be obtained and thus the content cannot be used without the authorized information recording medium 1.

The key obtaining module 2 in the present embodiment needs to be present on the information recording medium 1, whereas the reproducing module 3 and the encrypted content 4 do not need to be present on the information recording medium 1, and may be present outside the information recording medium 1. That is, there are four possible modes of arrangement of the reproducing module 3 and the encrypted content 4.
1) A case where the reproducing module 3 and the encrypted content 4 are present on the information recording medium 1
2) A case where the reproducing module 3 and the encrypted content 4 are present outside the information recording medium 1
3) A case where the reproducing module 3 is present on the information recording medium 1, and the encrypted content 4 is present outside the information recording medium 1
4) A case where the reproducing module 3 is present outside the information recording medium 1, and the encrypted content 4 is present on the information recording medium 1

Description in the following will be made mainly of a case where the reproducing module 3 and the encrypted content 4 are present in an information processing apparatus into which the information recording medium 1 is inserted (the second case described above). The reproducing module 3 and the encrypted content 4 may be downloaded in advance to the information processing apparatus via a network. Incidentally, suppose in the following that the information recording medium 1 is a read-only optical disk.

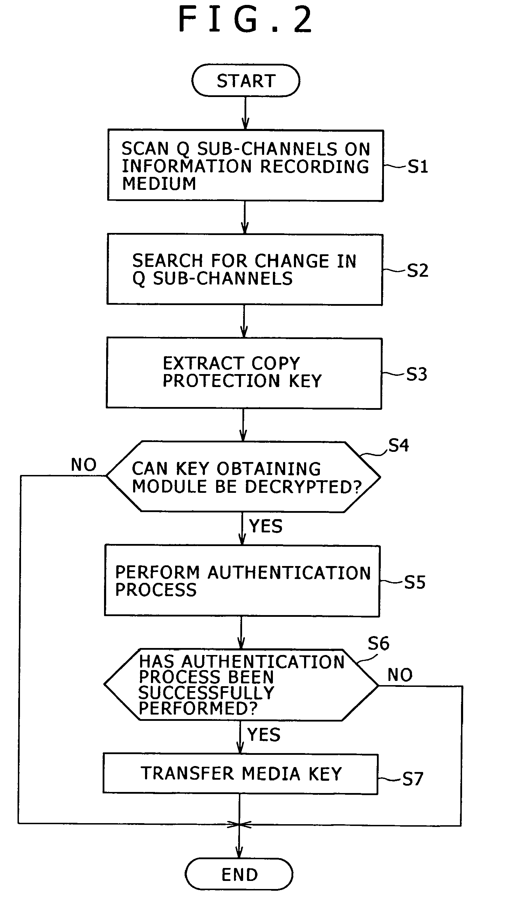

First, a flowchart of FIG. 2 represents a process to the obtainment of a media key by the key obtaining module 2 to the transfer of the media key to the reproducing module 3 when the technology of SecuROM (registered trademark) is used as the copy protection technology of the information recording medium 1.

The technology of SecuROM (registered trademark), to be brief, changes in advance a predetermined number of sub-codes (Q sub-channels) of predetermined addresses on the information recording medium 1, and uses the changed pattern as a copy protection key for encrypting an application. In executing the application, the predetermined number of Q sub-channels of the predetermined addresses are retrieved, and from the changed pattern thereof, the copy protection key is extracted. When the information recording medium 1 is copied, the changed invalid Q sub-channels are copied as valid Q sub-channels. As a result, a copy protection key different from the original copy protection key used to encrypt the application is extracted, and it is therefore impossible to decrypt and execute the application. Incidentally, the copy protection technology represented in FIG. 2 is described in Japanese Patent Laid-open No. Hei 11-250512, for example.

Specifically, in first step S1 in FIG. 2, the key obtaining module 2 scans a predetermined number of sub-codes (Q sub-channels) of predetermined addresses on the information recording medium 1 by an unencrypted first half part of a program, for example. In step S2, the key obtaining module 2 retrieves whether or not the Q sub-channels are valid. In next step S3, the key obtaining module 2 extracts a copy protection key according to the number of invalid Q sub-channels. In step S4, the key obtaining module 2 determines whether or not an encrypted second half part of the key obtaining module 2 can be decrypted using the extracted copy protection key. When the key obtaining module 2 determines in step S4 that the encrypted second half part of the key obtaining module 2 can be decrypted (Yes), the key obtaining module 2 proceeds to step S5. When the key obtaining module 2 determines in step S4 that the encrypted second half part of the key obtaining module 2 cannot be decrypted (No), the key obtaining module 2 ends the process. In step S5, the key obtaining module 2 performs an authentication process with the reproducing module 3. In step S6, whether or not the authentication process has been successfully performed is determined. When the key obtaining module 2 and the reproducing module 3 do not authenticate each other (No) in step S6, the process is ended. When the key obtaining module 2 and the reproducing module 3 authenticate each other (Yes), the media key is transferred to the reproducing module 3 in step S7.

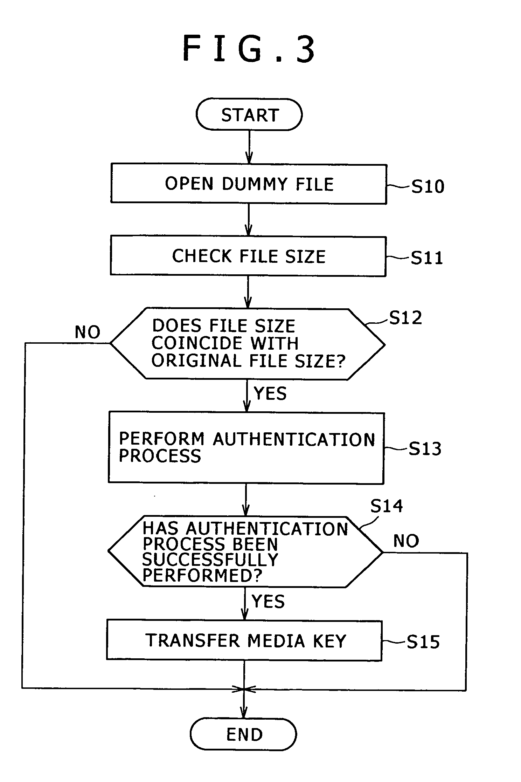

A flowchart of FIG. 3 represents a process to the obtainment of a media key by the key obtaining module 2 to the transfer of the media key to the reproducing module 3 when the technology of a so-called dummy file method is used as the copy protection technology of the information recording medium 1.

The technology of the dummy file method, to be brief, changes a directory record in advance as if a dummy file having a larger size than the information recording medium 1 is actually recorded on the information recording medium 1 and checks the size of the dummy file in executing an application. When the information recording medium 1 is to be copied, the dummy file size in the directory record, for example, needs to coincide with the size of the actual dummy file. Whether the size of the dummy file coincides with the original size (size larger than the size of the information recording medium 1) is checked before the application is executed. When the size of the dummy file does not coincide with the original size, the execution of the application is not allowed. Incidentally, the copy protection technology shown in FIG. 3 is described in Japanese Patent Laid-open No. 2001-229019, for example.

Specifically, in first step S10 in FIG. 3, the key obtaining module 2 opens a dummy file. In step S11, the key obtaining module 2 checks the file size of the dummy file. In next step S12, the key obtaining module 2 determines whether the file size coincides with an original file size. When the file size does not coincide with the original file size (No), the key obtaining module 2 ends the process. When the file size coincides with the original file size (Yes), the key obtaining module 2 proceeds to step S13. In step S13, the key obtaining module 2 performs an authentication process with the reproducing module 3. In step S14, whether or not the authentication process has been successfully performed is determined. When the key obtaining module 2 and the reproducing module 3 do not authenticate each other (No) in step S14, the process is ended. When the key obtaining module 2 and the reproducing module 3 authenticate each other (Yes), the media key is transferred to the reproducing module 3 in step S15.

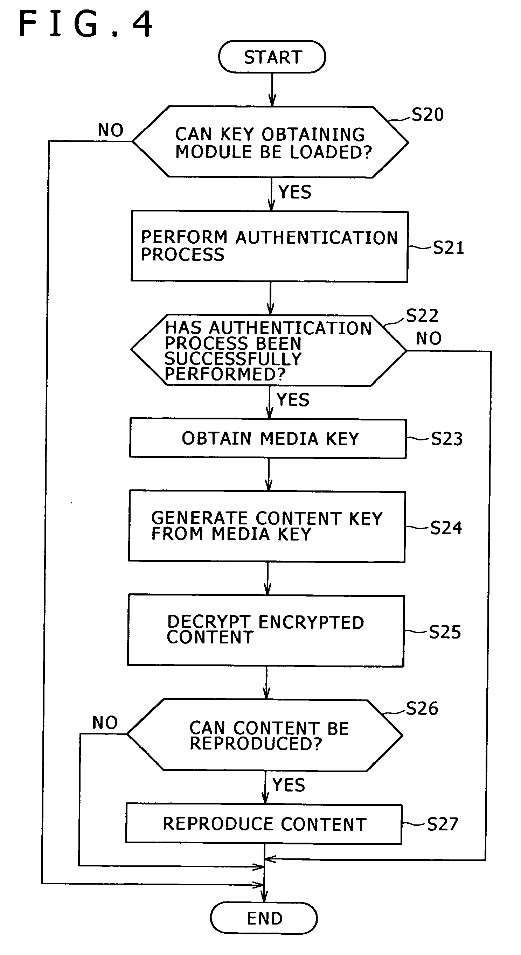

A flowchart of FIG. 4 represents a process to the obtainment by the reproducing module 3 of a key from the key obtaining module 2 to decrypting and reproduction by the reproducing module 3 of the encrypted content 4. In step S20, the reproducing module 3 determines whether or not the key obtaining module 2 can be loaded. When the key obtaining module 2 cannot be loaded (No), the reproducing module 3 ends the process. When the key obtaining module 2 can be loaded (Yes), the reproducing module 3 proceeds to step S21. In next step S21, the reproducing module 3 performs an authentication process with the key obtaining module 2. In step S22, whether or not the authentication process has been successfully performed is determined. When the key obtaining module 2 and the reproducing module 3 do not authenticate each other (No) in step S22, the reproducing module 3 ends the process. When the key obtaining module 2 and the reproducing module 3 authenticate each other (Yes), the reproducing module 3 obtains the media key from the key obtaining module 2 in step S23.

In next step S24, the reproducing module 3 generates a content key from the obtained media key. In step S25, the reproducing module 3 decrypts the encrypted content 4 using the content key. Incidentally, the encrypted content 4 may be present within an information processing apparatus into which the information recording medium 1 is inserted, or may be downloaded via a network. In step S26, whether or not the content can be reproduced is determined. When the content cannot be reproduced (No), the process is ended. When the content can be reproduced (Yes), the content is reproduced in step S27.

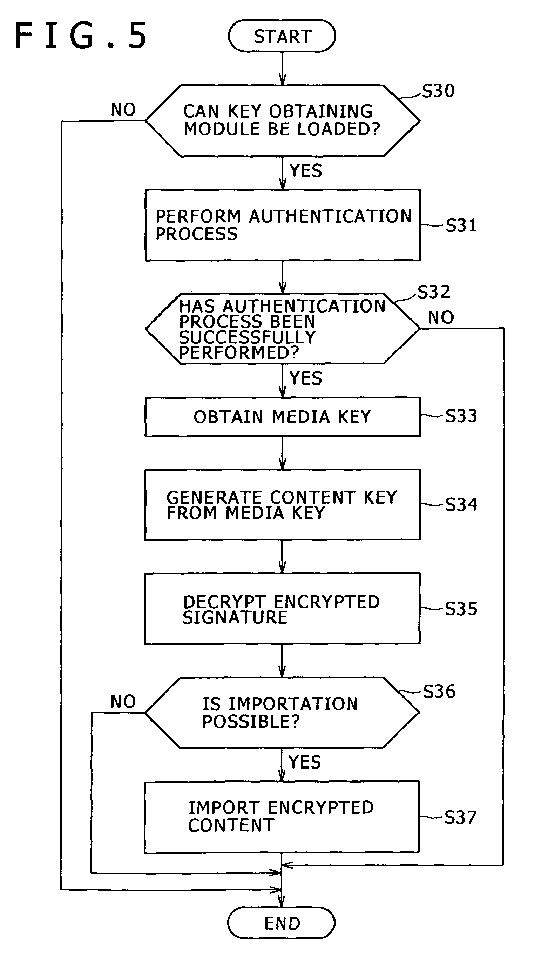

Incidentally, the above description with reference to FIG. 4 has been made of a case where the encrypted content 4 is reproduced. However, when the encrypted content 4 is recorded on the information recording medium 1, it is possible to import the encrypted content 4 to an information processing apparatus. A flowchart of FIG. 5 represents a process to the obtainment by the reproducing module 3 of a key from the key obtaining module 2 to importing of the encrypted content 4 to the information processing apparatus in such a case. Incidentally, a process to the generation of a content key in step S34 is the same as in FIG. 4 described above, and therefore description thereof will be omitted.

In step S35, using the generated content key, the reproducing module 3 decrypts an encrypted signature among right information and the encrypted signature attached to the encrypted content 4, for example, and verifies the right information. Incidentally, the right information and the encrypted signature may be present on the information recording medium 1, or may be downloaded via a network. Then, in step S36, whether or not importation is allowed is determined. When importation is not allowed (No), the process is ended. When importation is allowed (Yes), the encrypted content 4 is imported in step S37.

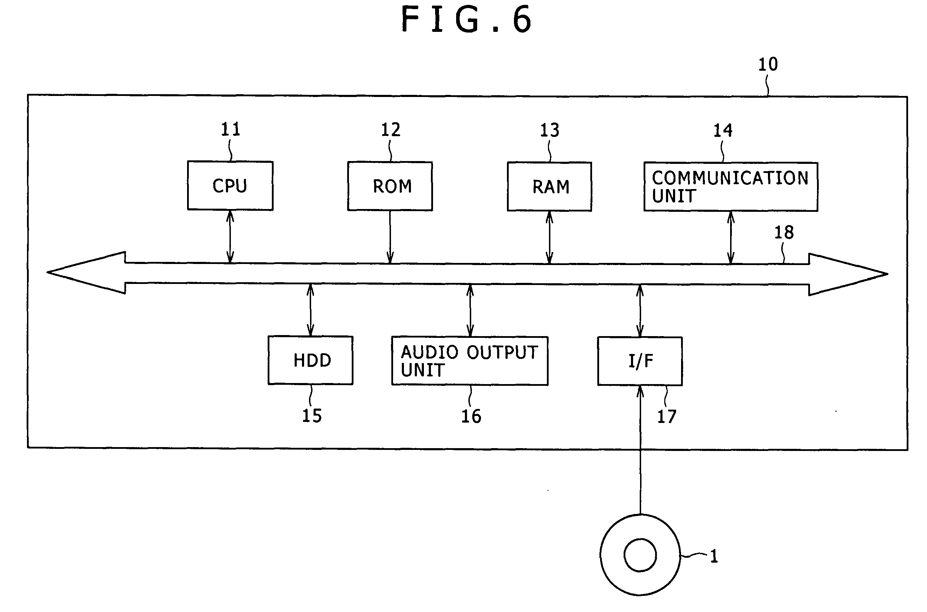

A concrete example of configuration of the above-described information processing apparatus will be described in the following with reference to FIG. 6. As shown in FIG. 6, the information processing apparatus 10 is formed by interconnecting, via a bus 18, a CPU (Central Processing Unit) 11 for centralized control of each part of the information processing apparatus 10, a ROM (Read Only Memory) 12, which is a nonvolatile memory, a RAM (Random Access Memory) 13, which is a volatile memory, a communication unit 14 for performing a communication process, an HDD (Hard Disk Drive) 15 for writing and/or reading various data on a hard disk not shown in the figure, an output unit 16 for outputting audio, and an interface (I/F) unit 17 for writing and/or reading various data on the information recording medium 1.

The CPU 11 performs control for program execution according to a program recorded in the ROM 12, for example. The RAM 13 temporarily stores programs and data necessary for the CPU 11 to perform various processes as required.

The communication unit 14 is formed by a modem or a terminal adapter, for example. The communication unit 14 is connected to the Internet via a telephone line.

The HDD 15 reads data from the hard disk not shown in the figure, and writes data input via the communication unit 14, for example.

The audio output unit 16 subjects for example audio data input via the communication unit 14 or audio data input from the information recording medium 1 via the interface unit 17 to conversion as required, and then outputs the audio data.

The interface unit 17 under control of the CPU 11 adjusts timing of input and output of data to and from the information recording medium 1, and converts the format of the data.

The reproducing module 3 is recorded on the HDD 15, for example, in the information processing apparatus 10. The reproducing module 3 performs the above-described process with the key obtaining module 2 recorded on the information recording medium 1 to obtain a media key. Then, the reproducing module 3 generates a content key from the media key. The reproducing module 3 decrypts an encrypted content 4 for example input via the communication unit 14 and recorded on the HDD 15, using the content key. The decrypted content is output from the audio output unit 16 under control of the CPU 11.

As described above, according to the information recording medium 1 and the information processing apparatus 10 according to the present embodiment, a content is provided in an encrypted state, and a media key used to decrypt the encrypted content 4 is recorded on the information recording medium 1 to which the copy protection technology is applied. Hence, even when the encrypted content 4 is copied, the media key cannot be obtained and thus the content cannot be used without the authorized information recording medium 1. Thereby the content is protected.

In particular, because the encrypted content 4 does not need to be present on the information recording medium 1 and may be present outside the information recording medium 1, it is possible to manage contents flexibly by for example distributing an encrypted content 4 that can be decrypted by only a purchaser of the information recording medium 1 via a network.

In addition, the reproducing module 3 only obtains a media key from the key obtaining module 2, generates a content key from the media key, and decrypts an encrypted content. The reproducing module 3 is not dependent on the copy protection technology applied to the information recording medium 1. Therefore, it is not necessary to install new software or the like on the information processing apparatus 10 when the copy protection technology is upgraded.

It is to be noted that the present invention is not limited exclusively to the foregoing embodiment, and various changes can of course be made without departing from the spirit of the present invention.

For example, while the foregoing embodiment has been described supposing that the content is audio data, the present invention is not limited to this, and the content may be other kinds of data such as video data and the like.

As described above in detail, according to the information recording medium, and the information processing apparatus and the information processing method according to the present invention, a mutual authentication process is performed between the first execution file recorded on the information recording medium in an uncopiable state and the second execution file, and then unique key information is transmitted from the first execution file to the second execution file. The second execution file generates encryption key information from the unique key information, decrypts an encrypted content using the encryption key information, and reproduces the content. Thus, unauthorized use of the content is prevented, and the content can be managed flexibly. Further, the copy protection technology can be upgraded easily.

## Claims

1. An information recording medium on which a first execution file is recorded in an uncopiable manner, wherein
said first execution file includes authenticating means for performing an authentication process with a second execution file, key obtaining means for obtaining unique key information unique to said first execution file, and transmitting means for transmitting said unique key information to said second execution file, and said first execution file is executed when said information recording medium is inserted into an information processing apparatus.

2. The information recording medium as claimed in claim 1, wherein
said unique key information is used to encrypt encryption key information for encrypting a content.

3. The information recording medium as claimed in claim 2, wherein
said second execution file or said content is recorded on said information recording medium, in said information processing apparatus, or in another information processing apparatus.

4. The information recording medium as claimed in claim 3, wherein:
said content is recorded on said information recording medium;
said unique key information is used to encrypt encryption key information for encrypting signature information attached to said content; and
said transmitting means transmits said content to said second execution file on a basis of said signature information.

5. An information processing apparatus into which an information recording medium on which a first execution file is recorded in an uncopiable manner is inserted, said information processing apparatus comprising:
a second execution file for reproducing an encrypted content,
wherein said second execution file includes authenticating means for performing an authentication process with said first execution file, key generating means for generating encryption key information on a basis of unique key information obtained from said first execution file, decrypting means for decrypting said encrypted content using said encryption key information, and reproducing means for reproducing the decrypted said content, and said second execution file is executed when said information recording medium is inserted.

6. The information processing apparatus as claimed in claim 5, wherein
said encrypted content is recorded on said information recording medium, in said information processing apparatus, or in another information processing apparatus.

7. The information processing apparatus as claimed in claim 6, wherein:
said encrypted content is recorded on said information recording medium;
said unique key information is used to encrypt encryption key information for encrypting signature information attached to said encrypted content; and
said second execution file has receiving means for receiving said encrypted content from said first execution file on a basis of said signature information.

8. An information processing method of an information processing apparatus into which apparatus an information recording medium on which a first execution file is recorded in an uncopiable manner is inserted, said information processing method comprising the steps of:
performing an authentication process with said first execution file;
generating encryption key information on a basis of unique key information obtained from said first execution file;
decrypting an encrypted content using said encryption key information; and
reproducing the decrypted said content.
